(19) Europäisches Patentamt
European Patent Office
Office européen des brevets

(11) EP 0 412 825 B1

(12) EUROPEAN PATENT SPECIFICATION

(45) Date of publication and mention
of the grant of the patent:
19.03.1997 Bulletin 1997/12

(51) Int Cl.⁶: **H03M 1/64**, G08C 19/46,
G06F 7/548, G06F 1/02
// G06F101/04

(21) Application number: 90308795.5

(22) Date of filing: 09.08.1990

(54) **Signal compensator**

Signalkompensator

Compensateur de signaux

(84) Designated Contracting States:
DE GB

(30) Priority: 10.08.1989 JP 205823/89
10.08.1989 JP 205824/89

(43) Date of publication of application:
13.02.1991 Bulletin 1991/07

(73) Proprietor: **Mitsubishi Chemical Corporation**
**Chiyoda-ku Tokyo (JP)**

(72) Inventor: **Seo, Yuzo**
**Kamakura-shi, Kanagawa-ken (JP)**

(74) Representative: **Allam, Peter Clerk et al**
**LLOYD WISE, TREGEAR & CO.,**
**Commonwealth House,**
**1-19 New Oxford Street**
**London WC1A 1LW (GB)**

(56) References cited:
FR-A- 2 081 247        GB-A- 2 040 469
US-A- 4 458 322

• MACHINES AND TOOLING. vol. 45, no. 12, 1974,
MELTON MOWBRAY GB pages 26 - 30;
A.ZINKOVSKII ET AL.: 'SYNCHRO
TRANSFORMERS AS DISPLACEMENT
SENSORS ON NC MACHINE TOOLS'
• MACHINE DESIGN. vol. 60, no. 13, 9 June 1988,
CLEVELAND US pages 126 - 129; J. LINDSEY:
'High Resolution Comes to Limit Switches'

## Description

This invention is concerned with a measurement system comprising a measuring instrument for sensing the angular position ($\theta$) of a rotatable part and providing input signals x and y that ideally vary as cos $\theta$ and sin $\theta$ respectively but are liable to error. The invention is more particularly concerned with the reduction of errors in the signals x and y due to known error factors. The invention relates to both a measurement system and to a method for compensating errors in the sensing of an angular position ($\theta$) of a rotatable part using a measuring instrument providing the input signals x and y mentioned above. The error components in the signals x and y may also be referred to as noise or distortion components.

A particular application of this invention is to the high-resolution measurement of position or angle for resolver and encoder signals involving an arc-tangent operation on the signals x and y.

Resolvers and encoders are widely used to measure rotational angles. Resolvers output one or more signal cycles approximated by sin $\theta$ and cos $\theta$ for each revolution, and these are processed (arc-tangent operation) to produce a signal equivalent to $\theta$. Encoders output several dozen to several thousand signal cycles approximated by sin$\theta$ and cos $\theta$ for each revolution, and in most cases the wave numbers of these signals are used to count the amount of rotation. Where higher resolution is required, arc-tangent operation is used to yield $\theta$ just as for resolvers.

To determine $\theta$ through arc-tangent operation with high precision, distortion-free sin $\theta$ and cos $\theta$ signals are essential, but in fact a variety of distortion components are included. Further, temperature-related and time-related device characteristic changes can affect the amount of distortion present.

These problems can be avoided to some extent through the use of high stability devices, temperature compensation for electronic circuitry, and precise adjustment, but these measures increase the cost of the equipment and still leave doubt as to reliability.

In U.S. patent 4,843,365 it is proposed to use a magnetoresistance element providing low-distortion sin $\theta$ and cos $\theta$ signals through the use of a magnetic encoder, but even the use of this element cannot prevent the obtained signal from degenerating through amplifier zero drift, gain fluctuation, and non-linearity. In addition, improper device positioning and scale pitch error can prevent the full potential of the device from being realized.

U.S. patent 4,458,322 discloses a servo system which includes a measurement of the angular position of a motor driven shaft. The measurement is made by an optical encoder to produce a pair of quadrature output signals. The signals are digitized, and subject to correction for offset and amplitude errors. The correction procedure includes peak detection of the digitized quadrature signals.

There will be described hereinafter how this invention is applied to provide a signal compensator in a measuring system of the kind outlined above which automatically reduces noise components generated in the measuring instrument, as by fluctuation of the zero point of sine and cosine function signals and amplitude fluctuation, and by cross-talk, to produce low-distortion sine and cosine signals. The signal compensator to be described reduces measurement error and makes possible an inexpensive high-precision measurement system.

According to one aspect of the present invention there is provided a measurement system comprising a measuring instrument for sensing the angular position $\theta$ of a rotatable part, said instrument providing input signals x and y that ideally vary as cos $\theta$ and sin $\theta$ respectively but are liable to error, and a signal compensator responsive to said input signals x and y to generate therefrom an output signal representing the angular position $\theta$, said input signal compensator including means to reduce errors in said signals x and y resulting from at least one of the following error factors, namely amplitude difference, zero point variation, cross-talk, second-order harmonic and third-order harmonic respectively, characterized in that said error reducing means comprises:

signal correcting means responsive to said input signals x and y to process said input signals x and y with the aid of stored coefficients and to generate corrected signals x and y respectively;

detection means responsive to said corrected signals x and y to detect at least one of a set of the maximum values $d_0$, $d_1$, $d_2$, $d_3$, $d_4$, $d_5$, $d_6$ and $d_7$ pertaining to the values x, x+y, y, y-x, -x, -(x+y), -y and x-y respectively of said corrected signals x and y;

coefficient generating means responsive to said at least one maximum value to generate said coefficients therefrom for storage and use by said signal correcting means in processing said input signals x and y,

output signal generating means responsive to said corrected signals x and y to generate an output signal representing said angular position; and

said detection means being operable to detect said at least one maximum value $d_i$ values of $\theta = i\pi/4 \pm \delta$ where $\delta$ is an angle whose cosine value can be approximated by 1 in practice and i is an integer number between 0 and 7.

According to another aspect of the invention there is provided a method for compensating errors in the sensing of an angular position $\theta$ of a rotatable part, which comprises using a measuring instrument to sense the angular position $\theta$ of a rotatable part and to provide input signals x and y that ideally vary as cos $\theta$ and sin $\theta$ respectively but are liable to error, and employing a signal compensation procedure responsive to said input signals x and y to generate therefrom an output signal representing the angular position θ, said signal compensation procedure including steps to reduce errors in said input signals x and y resulting from at least one of the following error factors, namely amplitude difference, zero point variation, cross-talk, second-order harmonic and third-order harmonic respectively, characterized in that the error-reducing steps comprise:

a signal correction step responsive to said input signals x and y to process said input signals x and y with the aid of stored coefficients and to generate corrected signals x and y respectively:

a detection step responsive to said corrected signals x and y to detect at least one of a set of maximum values $d_0$, $d_1$, $d_2$, $d_3$, $d_4$, $d_5$, $d_6$ and $d_7$ pertaining to the values x, x+y, y, y-x, -x, -(x+y), -y and x-y respectively of said corrected signals x and y;

a coefficient generating step responsive to said at least one maximum value to generate said coefficients therefrom for storage and use in said signal correction step in processing said input signals x and y;

an output signal generating step responsive to said corrected signals x and y to generate an output signal representing said angular position θ; and

said detection step including the detection of said at least one maximum value $d_i$ at values of $\theta = i\pi/4 \pm \delta$ where $\delta$ is an angle whose cosine value can be approximated by 1 in practice and i is an integer number between 0 and 7.

In one implementation of the invention correction is made only for amplitude and zero point fluctuation in the input signals x and y. In this case the maximum values detected arc $d_0$, $d_2$, $d_4$, and $d_6$. In another implementation correction is made only for cross-talk between, and zero point fluctuations in, the input signals x and y. The maximum values detected in this instance are $d_1$, $d_3$, $d_5$, and $d_7$.

In the signal compensator described below, the output signal generating means is operable to generate the output signal representing the angular position (θ) from the corrected signals x and y by an arc-tangent operation.

Furthermore, in the described signal compensator, the detection means operates to obtain a detected maximum value of a given kind, i.e. $d_0$ to $d_7$, by an exponential smoothing procedure operating on successive detected maximum values of the given kind and, preferably, such successive detected maximum values are detected at values of θ that are separated by π/4.

More generally the input signals x and y can be represented by:

$$x = G(\cos \theta + g \cos \theta + k \sin \theta - b_x \cos 2\theta + h \cos 3\theta) + z_x$$

$$y = G(\sin \theta - g \sin \theta + k \cos \theta + b_y \cos 2\theta - h \sin 3\theta) + z_y$$

where G, g, k, $b_x$, $b_y$, h, $z_x$ and $z_y$ are respective coefficients corresponding to the size of respective error factors consisting of average amplitude, amplitude difference between the two signals x and y, cross-talk, second-order harmonic included in the signal x, second-order harmonic included in the signal y, third-order harmonic included in both signals x and y at the same amount respectively, zero point of the signal x and zero point of the signal y. At least one of the coefficients is determined using the following expressions providing the relationships between the maximum values that are detected and the respective sizes of the error factors:

$$d_0 = G(1 + g - b_x + h) + z_x$$

$$d_1 = \sqrt{2}\, G(1 + k - h) + z_x + z_y$$

$$d_2 = G(1 - g - b_y + h) + z_y$$

$$d_3 = \sqrt{2}\, G(1 - k - h) - z_x + z_y$$

$$d_4 = G(1 + g + b_x + h) - z_x$$

$$d_5 = \sqrt{2}\, G(1 + k - h) - z_x - z_y$$

$$d_6 = G(1 - g + b_y + h) - z_y$$

$$d_7 = \sqrt{2}\, G(1 - k - h) + z_x - z_y.$$

The practice of this enables an improvement in measurement precision to be achieved by automatically measuring the degree of distortion component in the signal processing step and subtracting the distortion component from the signals, and by predicting measurement error from distortion component and compensating the result. These operations are handled digitally with a microprocessor, providing high reliability and stability with simple adjustment

The invention and its practice will now be further described with reference to the accompanying drawings in which:

Fig. 1 is a block diagram showing the configuration of one example of the signal compensator according to this invention;

Figs. 2 and 3 are flow charts showing the data flow and the processing flow by the signal compensator in Fig. 1, respectively;

Figs. 4(a) and 4(b) are graphs showing the change of error after power is turned on, for one rotation in the positive directrion; and

Fig. 5 is a graph showing the size of error after compensation, compared with that before compensation.

DETAILED DESCRIPTION OF THE PREFERRED EMBODIMENTS

First, the principle of this invention will be explained in detail.

The signal compensator is connected to the output of a measuring apparatus such as a resolver, an encoder and so on through amplifiers and A/D converters (for signals x and y). The input signals of this signal compensator can be approximated by the following expression:

$$x = G\,(\cos\theta + g\cos\theta + k\sin\theta - b_x\cos 2\theta + h\cos 3\theta) + z_x \tag{1}$$

$$y = G\,(\sin\theta - g\sin\theta + k\cos\theta + b_y\cos 2\theta - h\sin 3\theta) + z_y \tag{2}$$

where G is the average amplitude and does not affect an arc-tangent operation by which $\theta$ is to be derived from x and y, but other coefficients $g$, $k$, $b_x$, $b_y$, $h$, $z_x$ and $z_y$ all cause error.

Coefficient g represents the amplitude difference between x and y, and if the gain of their signal amplifiers differs a non-zero value will result. Amplifier gain is generally determined by the resistance, but this itself contains error making precise adjustment difficult. Further, temperature causes change in resistance, and therefore when the amount of change on the signal x side differs from that on the signal y side, second terms appear in expressions (1) and (2).

Coefficient k indicates cross-talk, and is a non-zero value when phase difference between x and y is not precisely $\pi/2$. This occurs when the signal lines approach and cause signal mixing between them, or when the encoder scale pitch is different from the value demanded by the detector pitch.

Coefficients $b_x$ and $b_y$ indicate the non-linearity of the amplifiers, and are non-zero values if their non-linearity cannot be neglected. The relation between non-linear amplifier input $v_i$ and output $v_o$ can be approximated by the second-order function $v_o = av_i - bv_i^2 + c$, and when $v_i$ is replaced by $\sin\theta$ and $\cos\theta$ the following expressions results

$$a\cos\theta - b\cos^2\theta + c = a\cos\theta - (b/2)\cos 2\theta + b/2 + c$$

$$a\sin\theta - b\sin^2\theta + c = a\sin\theta + (b/2)\cos 2\theta - b/2 + c$$

causing the appearance of fourth terms in expressions (1) and (2). The amount of non-linearity is dependent on the amplifier, and therefore the size of the fourth terms may differ between x and y.

Coefficient h represents the amount of third-order harmonic present, and will be a non-zero value when the source signal (unprocessed signal) from the detector is distorted from a sine wave. Distortion of the signal from the sine wave means harmonic content of a variety of orders and phases. However, for measurement instruments such as resolvers and encoders the detector is generally designed to be symmetric with respect to the signal sign and direction of rotation, so that harmonics of even orders and harmonics of odd orders with phases different from the fundamental wave will be suppressed. In these measurement devices the magnetic field distribution is unified by the air gap to reduce high-order harmonics, leaving third-order harmonics dominant. This means that the distortion of the source signal from the detector can be approximated by the fifth term.

$z_x$ and $z_y$ express the zero points of the signals, and will be non-zero values when the zero point fluctuation or adjustment error cannot be ignored. Amplifiers exhibit a phenomenon called drift, where temperature change and other factors can cause the zero point to vary. In many cases the zero point can be adjusted with a variable resistance (trimmer), but precise adjustment is difficult and temperature change will cause variation in resistance as well. In this case, the sixth term appears in expressions (1) and (2). When the measurement circuit functions from a single power supply, or when A/D converter outputs only positive values, this term appears in operation processing, but this is a problem in the definition of the reference point or in the signing system used for integers, and therefore outside the scope of this invention.

Input signals x and y are monitored to automatically determine any of the above coefficients that cannot be ignored and to compensate accordingly. Where all coefficients are determined the procedure is as follows:

The maximum values for x, x+y, y, -x+y, -x, -x-y, -y and x-y are determined respectively as $d_0$, $d_1$, $d_2$, $d_3$, $d_4$, $d_5$, $d_6$ and $d_7$. This may appear to be a random parameter selection, but $d_i$ corresponds to the maximum value for the general expression $x\cos i(\pi/4)+y\sin i(\pi/4)$. This is equivalent to $\pi/4$ radii for the Lissajous' curve obtained when the x and y signals are plotted orthogonally. In this specification, however, where i is odd number $d_i$, the value in the above general expression can be treated as times $\sqrt{2}$. This is because the expression itself can be simplified, reducing the operations required. This treatment is employed in the actual operation.

Coefficients $d_0$ through $d_7$, have the following relationships:

$$d_0 = G (1 + g - b_x + h) + z_x$$

$$d_1 = \sqrt{2}G (1 + k - h) + z_x + z_y$$

$$d_2 = G (1 - g - b_y + h) + z_y$$

$$d_3 = \sqrt{2}G (1 - k - h) - z_x + z_y$$

$$d_4 = G(1 + g + b_x + h) - z_x$$

$$d_5 = \sqrt{2}G (1 + k - h) - z_x - z_y$$

$$d_6 = G (1 - g + b_y + h) - z_y$$

$$d_7 = \sqrt{2}G (1 - k - h) + z_x - z_y$$

And their sums and differences results in the following values $s_0$ through $s_7$:

$$s_0 = (d_0 - d_4)/2 = z_x - Gb_x$$

$$s_1 = (d_1 - d_5)/2 = z_x + z_y$$

$$s_2 = (d_2 - d_6)/2 = z_y - Gb_y$$

$$s_3 = (d_3 - d_7)/2 = -z_x + z_y$$

$$s_4 = (d_0 + d_4)/2 = G(1 + g + h)$$

$$s_5 = (d_1 + d_5)/2 \sqrt{2} = G(1 + k - h)$$

$$s_6 = (d_2 + d_6)/2 = G(1 - g + h)$$

$$s_7 = (d_3 + d_7)/2 \sqrt{2} = G(1 - k - h)$$

This allows the coefficients to be determined through the following expressions:

$$z_x = (s_1 - s_3)/2$$

$$z_y = (s_1 + s_3)/2$$

$$Gb_x = z_x - s_0$$

$$Gb_y = z_y - s_2$$

$$Gg = (s_4 - s_6)/2$$

$$Gk = (s_5 - s_7)/2$$

$$Gh = (s_4 - s_5 + s_6 - s_7)/4$$

$$G = (s_4 + s_5 + s_6 + s_7)/4$$

Once these are known, approximate values for $\sin\theta$ and $\cos\theta$ are determined by:

$$\cos\theta \approx A = (x - z_x)/G$$

$$\sin\theta \approx B = (y - z_y)/G$$

making it possible to apply the double angle formula as:

$$\cos 2\theta \approx C = A^2 - B^2$$

$$\cos3\ \theta \approx D = A\ (A^2 - 3B^2)$$

$$\sin3\ \theta \approx E = B\ (3A^2 - B^2)$$

and compensate the source signal through product with Gg, Gk, $Gb_x$, $Gb_y$ and Gh.

$$G\cos\ \theta \approx x - GgA - GkB + Gb_xC - GhD - z_x$$

$$G\sin\ \theta \approx y + GgB - GkA - Gb_yC + GhE - z_y$$

$d_0$ through $d_7$ represent the maximum values for x, x+y, y, -x+y, -x, -x-y, -y and x-y, but as the encoder or resolver shaft cannot be expected to rotate at a fixed speed simple peak detection methods cannot be used. Since x and y are signals approximating $\cos\theta$ and $\sin\theta$, it is possible to detect these values by sampling x, x+y, etc., where $\theta$ is $i\pi/4$.

Of course there is some chance that $\theta$ is not exactly equal to $i\pi/4$, but as $\cos2\pi/64 = 0.995$ and $\cos2\pi/128 = 0.999$, signal measurement with a 0.1% resolution would allow angles from $\pm 2\pi/64$ to $\pm 2\pi/128$ to be used for obtaining the maximum values.

Usually, the value $\theta$ used here is yielded through an arc-tangent operation, but the value which has not subjected to arc-tangent operation may be used in some cases. For example, when $\theta$ is close to zero, $\theta$ can be approximated by $\sin\ \theta$, and when y or its compensated absolute value is small, it is sufficient to sample $d_0$ when x is positive or $d_4$ when x is negative. In the same way, when the absolute x value is small it is sufficient to sample $d_2$ or $d_6$ depending on the sign of y, and $d_1$ or $d_5$ depending on the sign of x+y when the absolute value of x-y is small, and $d_7$ or $d_3$ depending on the sign of x-y when the absolute value of x+y is small.

While measurement values will contain error due to intensity variation stemming from noise and scaling position, it can be expected that peak value change over time is slight, and therefore some form of averaging for peak sampling is desirable. In this case a moving average is often used, but this requires storage of a great number of past measurement points, and this is illsuited to microprocessors with limited storage capacity. If the following expression

$$d_0 = d_0 + p\ (x - d_0)$$

is used to update the peak value (given that p is a constant where 0< p << 1), it is sufficient to store only the latest peak value, which is extremely advantageous. This method is in fact a weighted average where weighting is reduced exponentially with time.

Use of this method means that as the shaft stops near $i\pi/4$, the specific peak value would be continuously updated. This would make the averaging to a specific biased data, and generate bad results such as causing gain fluctuation to be misinterpreted as zero point variation. To avoid this, it is desirable to perform $d_i$ correction and $d_i \pm 4$ correction alternately.

Expressions (1) and (2) take all possible factors for error into account, but in fact in most cases it is sufficient to compensate only for amplitude and zero point variation. In these cases, coefficients k, $b_x$, $b_y$ and h can be replaced by 0, as described below.

Where error factors are only amplitude and zero point fluctuation, the input signals can be expressed as:

$$x = g_x\cos\ \theta + z_x$$

$$y = g_y\sin\ \theta + z_y$$

where $g_x=G(1+g)$ and $g_y=G(1-g)$. In this case only $d_0$, $d_2$, $d_4$ and $d_6$ need be used, with relations:

$$d_0 = g_x + z_x$$

$$d_2 = g_y + z_y$$

$$d_4 = g_x - z_x$$

$$d_6 = g_y - z_y$$

This allows the determination of:

$$g_x = (d_0 + d_4)/2$$

$$g_y = (d_2 + d_6)/2$$

$$z_x = (d_0 - d_4)/2$$

$$z_y = (d_2 - d_6)/2$$

In this case signal compensation is simplified, and the following expressions can be used:

$$\cos\theta = (x - z_x)/g_x$$

$$\sin\theta = (y - z_y)/g_y$$

It is interesting to compare these extremely simple compensation expressions and the complete compensation expressions given above. It can be seen that the third harmonic enlarges the amplitude to $(1+h)$ times, and that the second harmonic changes zero points by $-Gb_x$ and $-Gb_y$, only. This can be taken to mean that where the third harmonic can be ignored G can be determined with the simplified expression, and where the second-order harmonic can be ignored the simplified expression can be used to determine $z_x$ and $z_y$. Further, because G error is canceled by the arc-tangent operation and because errors in other coefficients are canceled where second terms can be ignored, the same result is obtained regardless of which expression is used to determine G, for all practical purposes.

Where the amplitudes of two input signals are equal and only the cross-talk term is left, in other words where $g = b_x = b_y = h = 0$, the source signals can be given as:

$$x = G (\cos\theta + k\sin\theta) + z_x$$

$$y = G (\sin\theta + k\cos\theta) + z_y$$

where the relations of $d_1$, $d_3$, $d_5$ and $d_7$ are:

$$d_1 = \sqrt{2}G (1 + k) + z_x + z_y$$

$$d_3 = \sqrt{2}G (1 - k) - z_x + z_y$$

$$d_5 = \sqrt{2}G (1 + k) - z_x - z_y$$

$$d_7 = \sqrt{2}G\,(1 - k) - z_x - z_y$$

this results calculation of coefficients as:

$$G = (d_1 + d_3 + d_5 + d_7)\,/4\sqrt{2}$$

$$z_x = (d_1 - d_3 - d_5 + d_7)\,/4$$

$$z_y = (d_1 + d_3 - d_5 - d_7)\,/4$$

$$k = (d_1 - d_3 + d_5 - d_7)/4\sqrt{2}G$$

The method described above consists of detection of the amount of the error factors included in the source signal, and compensation by subtracting these from the source signal. If the size of the error factor is known, it is possible to estimate the size of the error when a signal with that error component is arc-tangent processed, allowing compensation of the operation results. This method is described below:

The source signal can be represented by vector notation as follows:

$$\mathbf{l}r* = \mathbf{l}r + \mathbf{l}g + \mathbf{l}k + \mathbf{l}b + \mathbf{l}h + \bar{z}$$

Each vector can be expressed as indicated below when components are given:

$$\mathbf{l}r^* = \frac{1}{G}\begin{pmatrix} x \\ y \end{pmatrix}$$

$$\mathbf{l}r = \begin{pmatrix} \cos\theta \\ \sin\theta \end{pmatrix}$$

$$\mathbf{l}g = g\begin{pmatrix} \cos\theta \\ -\sin\theta \end{pmatrix}$$

$$\mathbf{l}k = k\begin{pmatrix} \sin\theta \\ \cos\theta \end{pmatrix}$$

$$lb = \cos 2\,\theta \begin{pmatrix} -b\,x \\ b\,y \end{pmatrix}$$

$$lh = h \begin{pmatrix} \cos 3\,\theta \\ -\sin 3\,\theta \end{pmatrix}$$

$$\bar{z} = \frac{1}{G} \begin{pmatrix} z\,x \\ z\,y \end{pmatrix}$$

Although we need angle $\theta$ between vector lr and X axis, angle determined through arc-tangent operation using the source signal is angle $\theta^*$ between lr* and X axis. The difference between them can be approximated by tangential components $g_t$, $k_t$, $b_t$, $h_t$ and $z_t$ of vectors lg, lk, lb, lh and $\bar{z}$. These are given by the inner product of each vector and the tangential unit vectors $(-\sin\theta, \cos\theta)$ to produce the following expressions:

$$g_t = - g \sin 2\,\theta$$

$$k_t = k\cos 2\,\theta$$

$$b_t = b_x \sin\theta \cos 2\,\theta + b_y \cos\theta \cos 2\,\theta$$

$$h_t = -h\sin 4\,\theta$$

$$z_t = (-z_x \sin\theta + z_y \cos\theta)/G$$

This can be used in the expression:

$$\theta = \theta^* - g_t - k_t - b_t - h_t - z_t$$

to accurately determine the angle $\theta$. Note that where the absolute error vector is small compared to 1, error can be calculated using $\theta^*$ instead of $\theta$.

Either of the two compensation methods described above may be used individually, or they may be used specifically to match different error factors. In practical application the correction of the effects of third-order harmonics at the source signal requires more calculation, and compensation of angle error may therefore be more efficient, but direct compensation of other errors at the source signal is generally most efficient. Application requires selection of the optimum method, taking into account the amount of calculation required and remembering that accurate compensation is not possible where error is large because compensation is implemented through approximation.

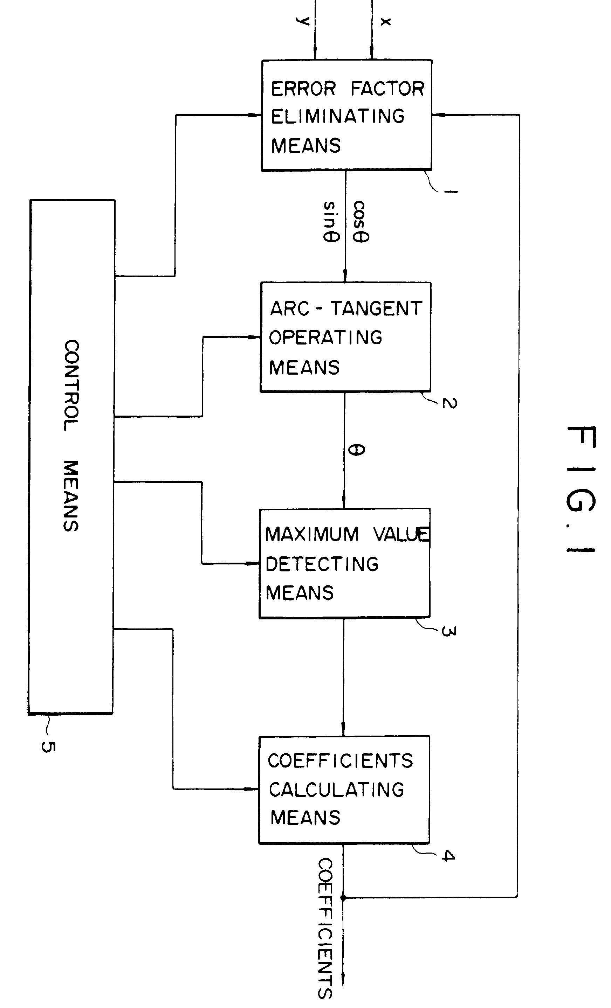

Fig. 1 shows a block diagram of the one example of the signal compensator, which comprises an error factor eliminating means 1, an arc-tangent operating means 2, a maximum value detecting means 3, a coefficients calculating means 4 and control means 5.

The error factor eliminating means 1 receives the input signals x and y, approximates the signals in accordance with the above-mentioned expressions, and compensates the signals using the coefficients supplied from the coefficients calculating means 4. The arc-tangent operating means 2 receive the compensated $\cos\theta$ and $\sin\theta$ signals and

calculates θ by arc-tangent operation. The maximum value detecting means 3 detects the maximum values of x, x+y, etc., using the method mentioned above. The coefficients calculating means 4 calculates the coefficients in accordance with the above-mentioned expressions providing the relationships between the maximum values detected by the maximum value detecting means 3 and the respective size of the error factors. The output of the coefficients calculating means 4 is fed back to the error factor eliminating means 1 for compensation. The control means 5 controls the operations of the means 1 through 4.

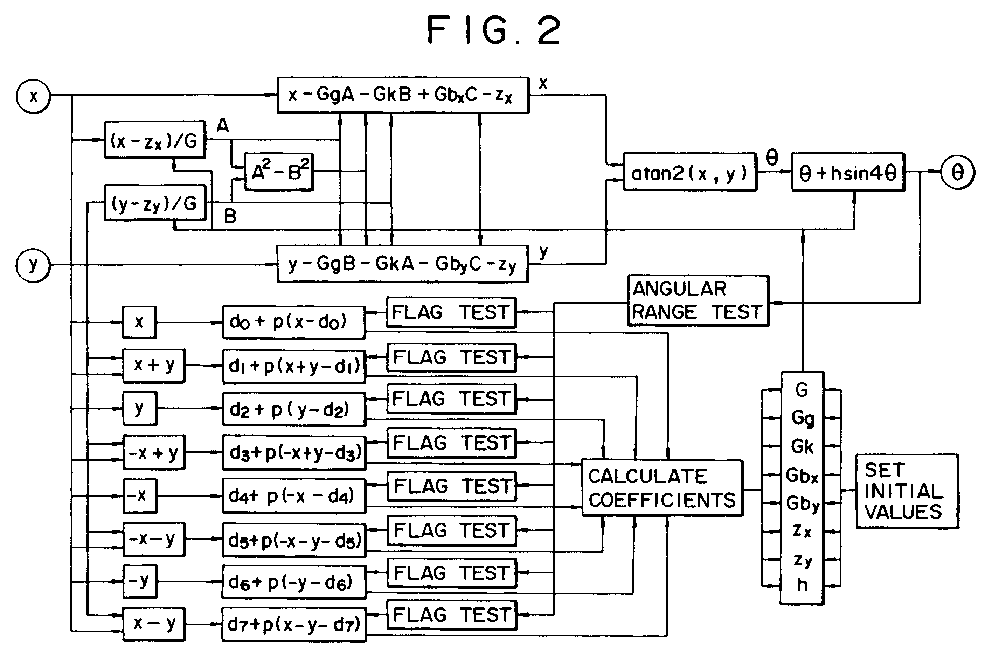

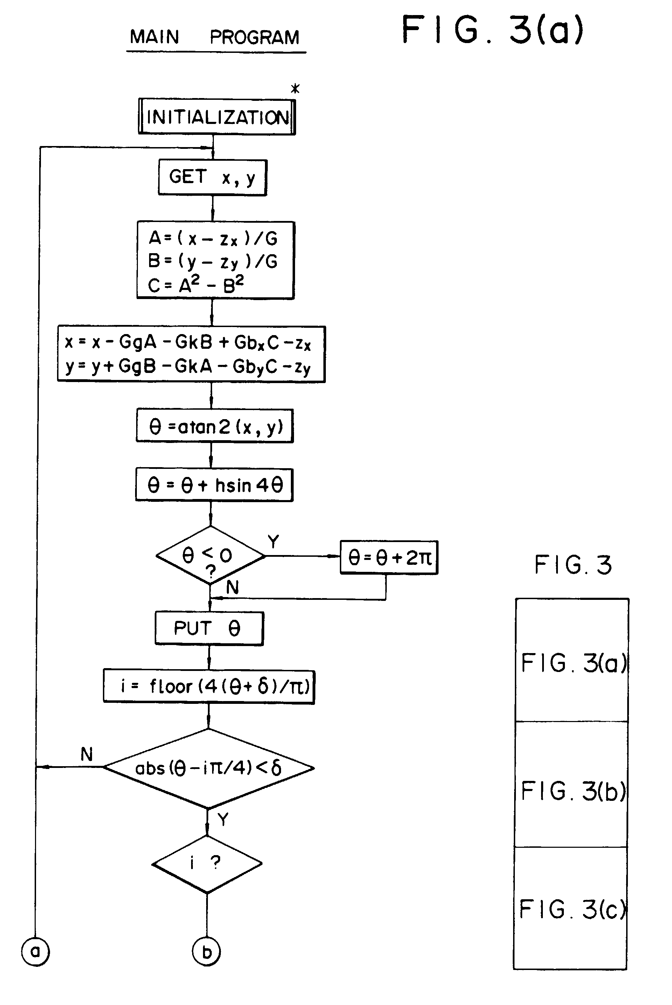

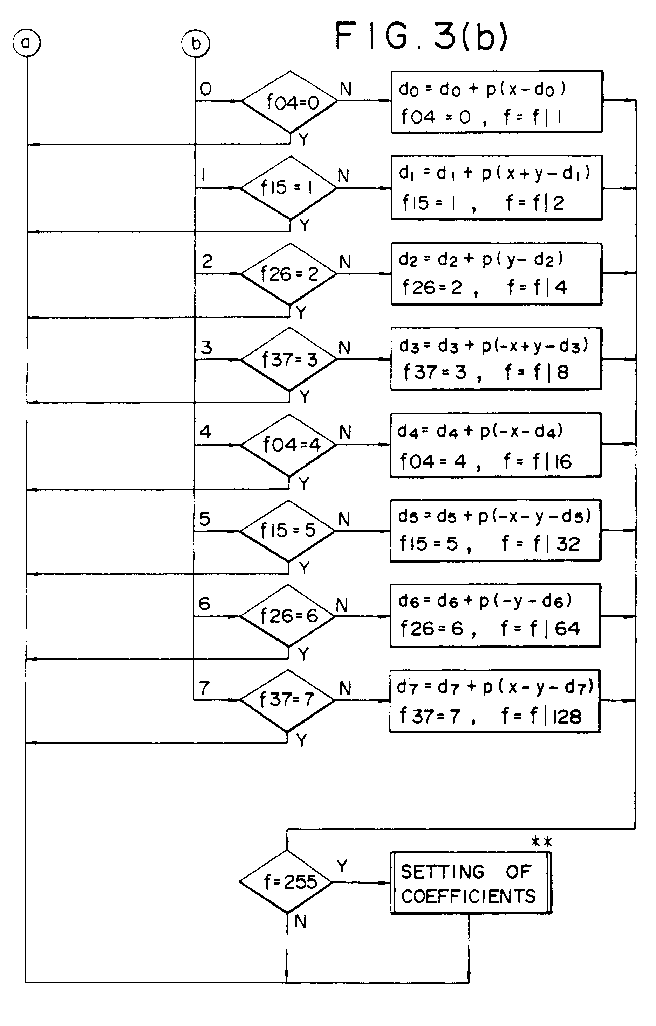

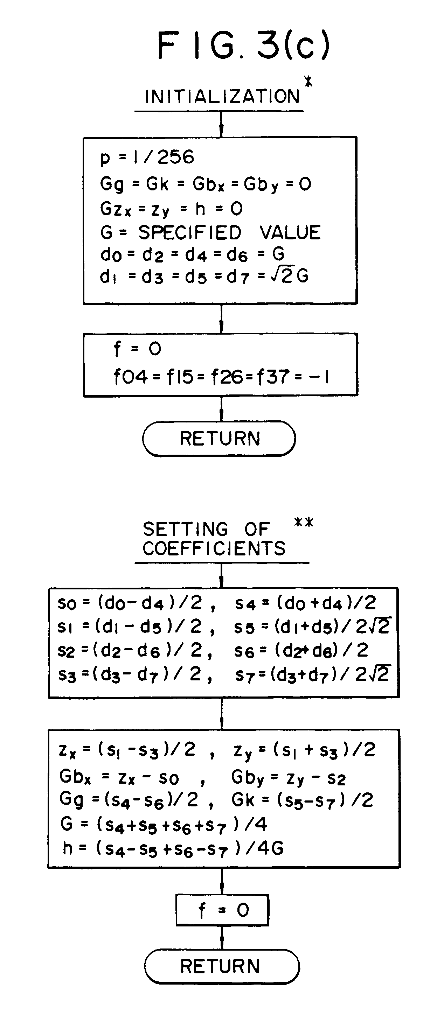

Fig. 2 indicates the data flow of the signal compensator of Fig.1, and Fig. 3 indicates the processing flow of a microprocessor handling the signal processing described in this invention, giving C language function names and operators. When the program as shown is started initialization (setting errors to zero, setting amplitude to specified values, setting maximum values to values indicated by amplitude), and then it enters a compensation operation loop.

Within the loop the signals x and y are read from A/D converters or other devices, and the zero point and amplitude used to determine $\cos\theta$ and $\sin\theta$. The double angle formula is then used to determine $\cos2\theta$. Next, the values determined above and the coefficients representing the amounts of included error are used to compensate the signals, and θ is determined through arc-tangent operation. The arc-tangent operation here is iterated for the angular range of vector (x,y) from -π to π, just as with the C language function atan2. This function actually implemented by case branching and table reference through the signs of both signals and the absolute value size functions. Next error due to third harmonic is predicted, compensated for, and the result output as a value from 0 to 2π.

Next, the value of θ is used to judge if any maximum values need to be compensated. Maximum value compensation is carried out alternately (using a flag such as f04) for the values where θ is different by π from each other. Exponential smoothing is used in compensation to weight the latest value with 1/256 weighing (in this example). After compensation, the alternating compensation flag and the flag indicating that all maximum values have been reset (appropriate f bit) are set. Finally, the coefficients are recalculated if all have been updated.

Fig. 3 follows C language expression to make comprehension easier, but Assembler description is actually used to enhance execution speed. Processing flow is simplified in this figure, but in fact actual processing consists of multiple interrupt routines operating together to minimize the time from input of the signal to output of θ.

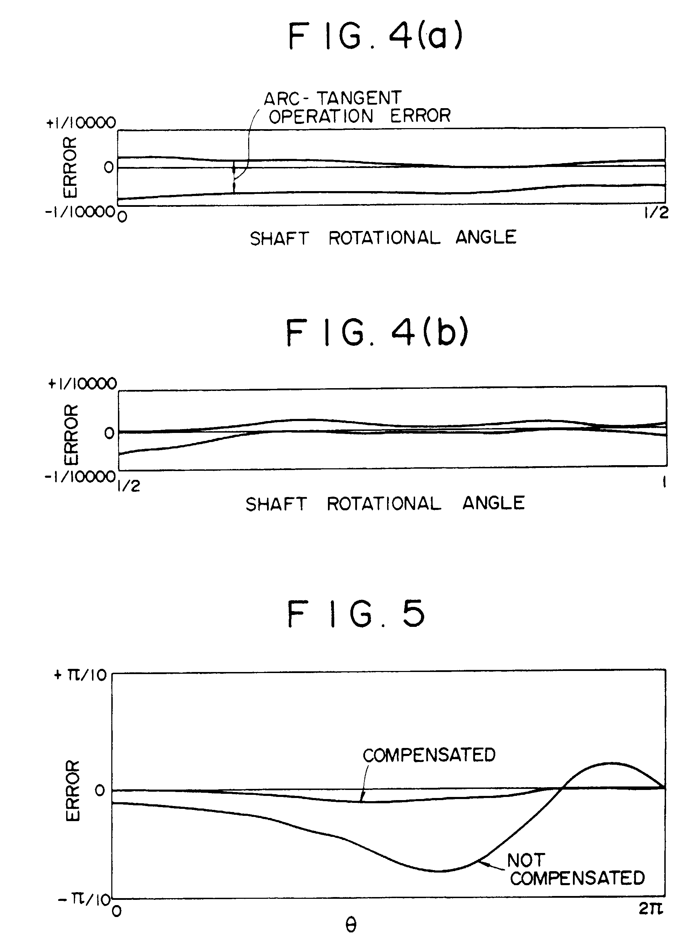

Fig. 4 indicates the change in error in an encoder after power is turned on, for one rotation in the positive direction. Figs. 4(a) and 4(b) indicate the error for the first half-rotation and the second half-rotation, at ±1/10000 rotations full-scale, respectively. In this case, one rotation of the encoder shaft corresponds to 512 cycles of $\sin\theta$ and $\cos\theta$. In Fig. 4 the arc-tangent error reduces with the rotation of the shaft. Fig. 5 also plots the arc-tangent operation error before and after compensation, with ordinate of ± 1/10000 rotations and abscissa of θ form 0 to 2π. From these figures it is clear that error rapidly decreases with rotation after the power is turned on.

## Claims

1. A measurement system comprising a measuring instrument for sensing the angular position Θ of a rotatable part, said instrument providing input signals x and y that ideally vary as cos Θ and sin Θ respectively but are liable to error, and a signal compensator responsive to said input signals x and y to generate therefrom an output signal representing the angular position Θ, said input signal compensator including means to reduce errors in said signals x and y resulting from at least one of the following error factors, namely amplitude difference, zero point variation, cross-talk, second-order harmonic and third-order harmonic respectively, characterized in that said error reducing means comprises:

    signal correcting means (1) responsive to said input signals x and y to process said input signals x and y with the aid of stored coefficients and to generate corrected signals x and y respectively;
    detection means (3) responsive to said corrected signals x and y to detect at least one of a set of the maximum values $d_0$, $d_1$, $d_2$, $d_3$, $d_4$, $d_5$, $d_6$ and $d_7$ pertaining to the values x, x+y, y, y-x, -x, -(x+y), -y and x-y respectively of said corrected signals x and y;
    coefficient generating means (4) responsive to said at least one maximum value to generate said coefficients therefrom for storage and use by said signal correcting means (1) in processing said input signals x and y;
    output signal generating means (2) responsive to said corrected signals x and y to generate an output signal representing said angular position Θ; and
    said detection means (3) being operable to detect said at least one maximum value $d_i$ at values of $\Theta = i\pi/4 \pm \delta$ where δ is an angle whose cosine value can be approximated by 1 in practice and i is an integer number between 0 and 7.

2. A measurement system as claimed in Claim 1 in which correction is made only for amplitude and zero point fluctuation in the input signals x and y, whereby the input signals x and y are represented by the expressions

$$x = g_x \cos \Theta + z_x$$

$$y = g_y \sin \Theta + z_y$$

where $g_x$ and $g_y$ represent the fluctuations of input signals x and y respectively from an average amplitude, and $z_x$ and $z_y$ represent the respective zero point fluctuation of said input signals x and y, and wherein said detection means (3) is operable to detect the maximum values $d_0$, $d_2$, $d_4$ and $d_6$.

3.  A measurement system as claimed in Claim 1 in which correction is made only for cross-talk between, and zero point fluctuations in, said input signals x and y, whereby the input signals are represented by the expressions:

$$x = G(\cos \Theta + k \sin \Theta) + z_x$$

$$y = G(\sin \Theta + k \cos \Theta) + z_y$$

where G is a common average amplitude coefficient, k is a cross-talk coefficient and $z_x$ and $z_y$ represent the respective zero point fluctuations of said input signals x and y, and wherein said detection means (3) is operable to detect the maximum values $d_1$, $d_3$, $d_5$ and $d_7$.

4.  A measurement system as claimed in Claim 1 in which said input signals x and y are represented by the expressions:

$$x = G(\cos \Theta + g \cos \Theta + k \sin \Theta - b_x \cos 2\Theta + h \cos 3\Theta) + z_x$$

$$y = G(\sin \Theta - g \sin \Theta + k \cos \Theta + b_y \cos 2\Theta - h \sin 3\Theta) + z_y$$

where G, g, k, $b_x$, $b_y$, h, $z_x$ and $z_y$ are respective coefficients corresponding to the size of respective error factors consisting of average amplitude, amplitude difference between the two signals x and y, cross-talk, second-order harmonic included in the signal x, second-order harmonic included in the signal y, third-order harmonic included in both signals x and y at the same amount respectively, zero point of the signal x and zero point of the signal y; and wherein said coefficient generating means (4) determines at least one of the coefficients using the following expressions providing the relationships between the values detected by the detection means (3) and the respective sizes of the error factors:

$$d_0 = G(1 + g - b_x + h) + z_x$$

$$d_1 = \sqrt{2}\, G(1 + k\text{-}h) + z_x + z_y$$

$$d_2 = G(1 - g - b_y + h) + z_y$$

$$d_3 = \sqrt{2}\, G(1 - k - h) - z_x + z_y$$

$$d_4 = G(1 + g + b_x + h) - z_x$$

$$d_5 = \sqrt{2}\, G(1 + k - h) - z_x - z_y$$

$$d_6 = G(1 - g + b_y + h) - z_y$$

$$d_7 = \sqrt{2}\, G(1 - k - h) + z_x - z_y.$$

**5.** A measurement system as claimed in any preceding claim in which said detection means (3) operates to obtain a detected maximum value of a given kind ($d_1$ to $d_7$) by an exponential smoothing procedure operating on successive detected maximum values of the given kind.

**6.** A measurement system as claimed in Claim 5 in which said detection means (3) operates to perform said exponential smoothing procedure on successive detected maximum values of a given kind which are detected at values of $\Theta$ that are separated by $\pi/4$.

**7.** A measurement system as claimed in any preceding claim in which said output signal generating means (2) is operable to generate said output signal representing the angular position $\Theta$ from said corrected signals x and y by an arc-tangent operation.

**8.** A method for compensating errors in the sensing of an angular position $\Theta$ of a rotatable part, which comprises using a measuring instrument to sense the angular position $\Theta$ of a rotatable part and to provide input signals x and y that ideally vary as cos $\Theta$ and sin $\Theta$ respectively but are liable to error, and employing a signal compensation procedure responsive to said input signals x and y to generate therefrom an output signal representing the angular position $\Theta$, said signal compensation procedure including steps to reduce errors in said input signals x and y resulting from at least one of the following error factors, namely amplitude difference, zero point variation, crosstalk, second-order harmonic and third-order harmonic respectively, characterized in that the error-reducing steps comprise:

    a signal correction step (1) responsive to said input signals x and y to process said input signals x and y with the aid of stored coefficients and to generate corrected signals x and y respectively:

    a detection step (3) responsive to said corrected signals x and y to detect at least one of a set of maximum values $d_0$, $d_1$, $d_2$, $d_3$, $d_4$, $d_5$, $d_6$ and $d_7$ pertaining to the values x, x+y, y, y-x, -x, -(x+y), -y and x-y respectively of said corrected signals x and y;

    a coefficient generating step (4) responsive to said at least one maximum value to generate said coefficients therefrom for storage and use in said signal correction step (1) in processing said input signals x and y;

    an output signal generating step (2) responsive to said corrected signals x and y to generate an output signal representing said angular position $\Theta$; and

    said detection step (3) including the detection of said at least one maximum value $d_i$ at values of $\Theta = i\pi/4 \pm \delta$ where $\delta$ is an angle whose cosine value can be approximated by 1 in practice and i is an integer number between 0 and 7.

**9.** A method for compensating errors as claimed in Claim 8 in which said input signals x and y are represented by the expressions:

$$x = G(\cos \Theta + g \cos \Theta + k \sin \Theta - b_x \cos 2\Theta + h \cos 3\Theta) + z_x$$

$$y = G(\sin \Theta - g \sin \Theta + k \cos \Theta + b_y \cos 2\Theta - h \sin 3\Theta) + z_y$$

where G, g, k, $b_x$, $b_y$, h, $z_x$ and $z_y$ are respective coefficients corresponding to the size of respective error factors consisting of average amplitude, amplitude difference between the two signals x and y, cross-talk, second-order harmonic included in the signal x, second-order harmonic included in the signal y, third-order harmonic included in both signals x and y at the same amount respectively, zero point of the signal x and zero point of the signal y; and wherein said coefficient generating step (4) determines at least one of the coefficients using the following expressions providing the relationships between the values detected by the first means and the respective sizes of the error factors:

$$d_0 = G(1 + g - b_x + h) + z_x$$

$$d_1 = \sqrt{2}G(1 + k \cdot h) + z_x + z_y$$

$$d_2 = G(1 - g - b_y + h) + z_y$$

$$d_3 = \sqrt{2}\,G(1 - k - h) - z_x + z_y$$

$$d_4 = G(1 + g + b_x + h) - z_x$$

$$d_5 = \sqrt{2}\,G(1 + k - h) - z_x - z_y$$

$$d_6 = G(1 - g + b_y + h) - z_y$$

$$d_7 = \sqrt{2}\,G(1 - k - h) + z_x - z_y.$$

**Patentansprüche**

1.  Meßsystem mit einem Meßinstrument zum Abtasten der Winkelstellung $\theta$ eines drehbaren Teiles, wobei das Instrument Eingangssignale x und y liefert, die sich im Idealfall wie Cosinus $\theta$ bzw. Sinus $\theta$ verhalten, aber mit einem Fehler behaftet sind, und mit einem Signalkompensator, der ein die Winkelstellung $\theta$ repräsentierendes Ausgangssignal in Abhängigkeit von den Eingangssignalen x und y erzeugt, wobei der Eingangssignalkompensator eine Einrichtung zum Vermindern von Fehlern in den Signalen x und y aufweist, die mindestens aus einem der folgenden Fehlerfaktoren herrühren, nämlich Amplitudendifferenz, Nullpunktschwankung, Übersprechen, Oberschwingung zweiter Ordnung, bzw. Oberschwingung dritter Ordnung, dadurch gekennzeichnet, daß die Fehlerverminderungseinrichtung aufweist:

    eine Signalkorrektureinrichtung (1), die auf die Eingangssignale x und y anspricht, um die Eingangssignale x und y mit Hilfe gespeicherter Koeffizienten zu verarbeiten und um korrigierte Signale x bzw. y zu erzeugen;
    eine Detektionseinrichtung (3), die auf die korrigierten Signale x und y anspricht, um mindestens einen Wert aus einer Menge mit Maximalwerten $d_0$, $d_1$, $d_2$, $d_3$, $d_4$, $d_5$, $d_6$ und $d_7$ betreffend die Werte x, x+y, y, y-x, -x, -(x+y), -y bzw. x-y der korrigierten Signale x und y zu erzeugen;
    eine Koeffizientenerzeugungseinrichtung (4), die auf den mindestens einen Maximalwert anspricht, um daraus beim Verarbeiten der Eingangssignale x und y die Koeffizienten zum Speichern und zum Gebrauch durch die Signalkorrektureinrichtung (1) zu erzeugen,
    eine Ausgangssignalerzeugungseinrichtung (2), die auf die korrigierten Signale x und y anspricht, um ein Ausgangssignal, das die Winkelstellung $\theta$ repräsentiert, zu erzeugen; und
    wobei die Detektionseinrichtung (3) betrieben werden kann, um den mindestens einen Maximalwert $d_i$ bei Werten von $\theta = i\pi/4 \pm \delta$ zu detektieren, wobei $\delta$ ein Winkel ist, dessen Cosinuswert in der Praxis durch den Wert 1 angenähert werden kann, und wobei i eine ganze Zahl zwischen 0 und 7 ist.

2.  Meßsystem wie in Anspruch 1 beansprucht, in welchem die Korrektur nur hinsichtlich der Amplituden- und Nullpunktschwankung der Eingangssignale x und y durchgeführt wird, wodurch die Eingangssignale x und y durch die Ausdrücke

$$x = g_x \cos \Theta + z_x$$

$$y = g_y \sin \Theta + z_y$$

dargestellt werden, wobei $g_x$ und $g_y$ die Schwankungen der Eingangssignale x bzw. y gegenüber einer gemittelten Amplitude darstellen, und wobei $z_x$ und $z_y$ die entsprechende Nullpunkschwankung der Eingangssignale x bzw. y darstellen, und wobei die Detektionseinrichtung (3) betrieben werden kann, um die Maximalwerte $d_0$, $d_2$, $d_4$ und $d_6$ zu detektieren.

3. Meßsystem wie in Anspruch 1 beansprucht, bei dem die Korrektur nur hinsichtlich Übersprechen zwischen und Nullpunktschwankungen bei den Eingangssignalen x und y durchgeführt wird, wodurch die Eingangssignale durch die Gleichungen

$$x = G(\cos \Theta + k \sin \Theta) + z_x$$

$$y = G(\sin \Theta + k \cos \Theta) + z_y$$

dargestellt werden, wobei G ein gemeinsamer mittlerer Amplitudenkoeffizient ist, k ein Übersprechkoeffizient ist und $z_x$ und $z_y$ die entsprechende Nullpunktschwankung der Eingangssignale x bzw. y darstellen, und wobei die Detektionseinrichtung (3) betrieben werden kann, um die Maximalwerte $d_1$, $d_3$, $d_5$ und $d_7$ zu detektieren.

4. Meßsystem wie in Anspruch 1 beansprucht, wobei die Eingangssignale x und y durch die Ausdrücke

$$x = G(\cos \Theta + g \cos \Theta + k \sin \Theta - b_x \cos 2\Theta + h \cos 3\Theta) + z_x$$

$$y = G(\sin \Theta - g \sin \Theta + k \cos \Theta + b_y \cos 2\Theta - h \sin 3\Theta) + z_y$$

dargestellt werden, wobei G, g, k, $b_x$, $b_y$, h, $z_x$ und $z_y$ Koeffizienten entsprechend der Größe der entsprechenden Fehlerfaktoren sind, bestehend aus mittlerer Amplitude, Amplitudendifferenz zwischen den beiden Signalen x und y, Übersprechen, in dem Signal x enthaltener Oberschwingung zweiter Ordnung, in dem Signal y enthaltener Oberschwingung zweiter Ordnung, in beiden Signalen x bzw. y in gleicher Größe enthaltener Oberschwingung dritter Ordnung, Nullpunkt des Signals x und Nullpunkt des Signals y, und wobei die Koeffizientenerzeugungseinrichtung (4) mindestens einen der Koeffizienten unter Verwendung der folgenden Ausdrücke bestimmt, die die Beziehungen zwischen den durch die Detektionseinrichtung (3) detektierten Werten und den entsprechenden Größen der Fehlerfaktoren liefern:

$$d_0 = G(1 + g - b_x + h) + z_x$$

$$d_1 = \sqrt{2}\, G(1 + k - h) + z_x + z_y$$

$$d_2 = G(1 - g - b_y + h) + z_y$$

$$d_3 = \sqrt{2}\, G(1 - k - h) - z_x + z_y$$

$$d_4 = G(1 + g + b_x + h) - z_x$$

$$d_5 = \sqrt{2}\, G(1 + k - h) - z_x - z_y$$

$$d_6 = G(1 - g + b_y + h) - z_y$$

$$d_7 = \sqrt{2}\, G(1 - k - h) + z_x - z_y.$$

**5.** Meßsystem wie in irgendeinem der vorstehenden Patentansprüche beansprucht, in welchem die Detektionseinrichtung arbeitet, um einen detektierten Maximalwert einer gegebenen Art ($d_1$ bis $d_7$) durch eine exponentielle Glättungsprozedur, die auf aufeinanderfolgenden detektierten Maximalwerten der gegebenen Art arbeitet, zu erhalten.

**6.** Meßsystem wie in Anspruch 5 beansprucht, in welchem die Detektionseinrichtung (3) arbeitet, um die exponentielle Glättungsprozedur auf aufeinanderfolgenden detektierten Maximalwerten einer gegebenen Art, die bei Werten von $\theta$, welche durch $\pi/4$ voneinander beabstandet sind, detektiert werden, auszuführen.

**7.** Meßsystem wie in irgendeinem der vorstehenden Ansprüche beansprucht, in dem die Ausgangssignalerzeugungseinrichtung (2) betrieben werden kann zum Erzeugen des die Winkelstellung $\theta$ darstellenden Ausgangssignals durch eine Arcustangensoperation aus den korrigierten Signalen x und y.

**8.** Verfahren zum Kompensieren von Fehlern beim Abtasten einer Winkelstellung $\theta$ eines drehbaren Teiles, das den Gebrauch eines Meßinstrumentes zum Abtasten der Winkelstellung $\theta$ eines drehbaren Teiles und zum Liefern von Eingangssignalen x und y umfaßt, welche sich im Idealfall wie Cosinus $\theta$ bzw. Sinus $\theta$ verhalten, welche jedoch mit einem Fehler behaftet sind, und welches eine auf die Eingangssignale x und y ansprechende Sigmlkompensationsprozedur einsetzt, um daraus ein die Winkelstellung $\theta$ repräsentierendes Ausgangssignal zu erzeugen, wobei die Signalkompensationsprozedur Schritte zum Vermindern von Fehlern in den Eingangssignalen x und y beinhaltet, die von mindestens einem der folgenden Fehlerfaktoren herrühren, nämlich Amplitudendifferenz, Nullpunktschwankung, Übersprechen, Oberschwingung zweiter Ordnung und Oberschwingung dritter Ordnung, dadurch gekennzeichnet, daß die fehlervermindernden Schritte umfassen:

einen auf die Eingangssignale x und y ansprechenden Signalkorrekturschritt (1) zum Verarbeiten der Eingangssignale x und y mit Hilfe gespeicherter Koeffizienten und zum Erzeugen korrigierter Signale x bzw. y;
einen auf die korrigierten Signale x und y ansprechenden Detektionsschritt (3) um mindestens einen Wert aus einer Menge von Maximalwerten $d_0$, $d_1$, $d_2$, $d_3$, $d_4$, $d_5$, $d_6$ und $d_7$ betreffend die Werte x, x+y, y, y-x, -x, -(x+y), -y bzw. x-y der korrigierten Signale x und y zu detektieren;
einen auf den mindestens einen Maximalwert ansprechenden Koeffizientenerzeugungsschritt (4), um daraus beim Verarbeiten der Eingangssignale x und y die Koeffizienten zum Speichern und zum Gebrauch in dem Signalkorrekturschritt (1) zu erzeugen;
einen auf die korrigierten Signale x und y ansprechenden Ausgangssignalerzeugungsschritt (2), um ein Ausgangssignal, das die Winkelstellung $\theta$ repräsentiert, zu erzeugen; und
wobei der Detektionsschritt (3) die Detektion des mindestens einen Maximalwertes $d_i$ bei Werten von $\theta = i\pi/4 \pm \delta$ einschließt, wobei $\delta$ ein Winkel ist, dessen Cosinuswert in Praxis durch dem Wert 1 angenähert werden kann, wobei i eine ganze Zahl zwischen 0 und 7 ist.

**9.** Verfahren zum Kompensieren von Fehlern wie in Anspruch 8 beansprucht, wobei die Eingangssignale x und y durch die Ausdrücke

$$x = G(\cos\Theta + g\cos\Theta + k\sin\Theta - b_x\cos 2\Theta + h\cos 3\Theta) + z_x$$

$$y = G(\sin\Theta - g\sin\Theta + k\cos\Theta + b_y\cos 2\Theta - h\sin 3\Theta) + z_y$$

dargestellt werden, wobei G, g, k, $b_x$, $b_y$, h, $z_x$ und $z_y$ Koeffizienten entsprechend der Größe der entsprechenden Fehlerfaktoren sind, bestehend aus mittlerer Amplitude, Amplitudendifferenz zwischen den beiden Signalen x und y, Übersprechen, in dem Signal x enthaltener Oberschwingung zweiter Ordnung, in dem Signal y enthaltener Oberschwingung zweiter Ordnung, in beiden Signalen x und y in gleicher Größe enthaltener Oberschwingung dritter Ordnung, Nullpunkt des Signals x bzw. Nullpunkt des Signals y, und wobei der Koeffizientenerzeugungsschritt (4) mindestens einen der Koeffizienten unter Nutzung der folgenden Ausdrücke bestimmt, die die Beziehungen zwischen den durch die erste Einrichtung detektierten Werten und den entsprechenden Größen der Fehlerfaktoren liefern:

$$d_0 = G(1 + g - b_x + h) + z_x$$

$$d_1 = \sqrt{2}\, G(1 + k - h) + z_x + z_y$$

$$d_2 = G(1 - g - b_y + h) + z_y$$

$$d_3 = \sqrt{2}\, G(1 - k - h) - z_x + z_y$$

$$d_4 = G(1 + g + b_x + h) - z_x$$

$$d_5 = \sqrt{2}\, G(1 + k - h) - z_x - z_y$$

$$d_6 = G(1 - g + b_y + h) - z_y$$

$$d_7 = \sqrt{2}\, G(1 - k - h) + z_x - z_y.$$

**Revendications**

1. Système de mesure comprenant un instrument de mesure pour détecter la position angulaire $\theta$ d'une pièce rotative, ledit instrument fournissant des signaux d'entrée x et y qui varient idéalement comme $\cos \theta$ et $\sin \theta$ respectivement, mais sont susceptibles d'erreur, et un compensateur de signaux répondant auxdits signaux d'entrée x et y pour produire à partir d'eux un signal de sortie représentant la position angulaire $\theta$, ledit compensateur de signaux d'entrée comprenant un moyen de réduction des erreurs dans lesdits signaux x et y résultant d'au moins l'un des facteurs d'erreur suivants, à savoir : la différence d'amplitude, la variation du point zéro, la diaphonie, l'harmonique de second ordre et l'harmonique de troisième ordre, respectivement, caractérisé en ce que ledit moyen de réduction des erreurs comprend :

   un moyen de correction des signaux (1) répondant auxdits signaux d'entrée x et y pour traiter lesdits signaux d'entrée x et y avec l'aide de coefficients en mémoire et pour générer des signaux corrigés x et y respectivement ;
   un moyen de détection (3) répondant auxdits signaux corrigés x et y pour détecter au moins l'une d'un ensemble des valeurs maximales $d_0$, $d_1$, $d_2$, $d_3$, $d_4$, $d_5$, $d_6$ et $d_7$ appartenant aux valeurs x, x+y, y, y-x, -x, -(x+y), -y et x-y, respectivement, desdits signaux corrigés x et y;
   un moyen générateur de coefficients (4) répondant à ladite ou auxdites valeurs maximales pour générer lesdits coefficients à partir d'elles pour qu'ils soient mis en mémoire et utilisés par ledit moyen de correction de signaux (1) dans le traitement des signaux d'entrée x et y,
   un moyen générateur de signaux (2) répondant auxdits signaux corrigés x et y pour générer un signal de sortie représentant ladite position angulaire $\theta$; et
   ledit moyen de détection (3) pouvant être utilisé pour détecter ladite ou lesdites valeurs maximales di aux valeurs de $\theta = i\pi/4 \pm \delta$ où $\delta$ est un angle dont la valeur du cosinus peut être approximativement équivalente à 1 en pratique et i est un nombre entier entre 0 et 7.

2. Système de mesure selon la Revendication 1 dans lequel la correction n'est faite que pour l'amplitude et la fluctuation du point zéro dans les signaux d'entrée x et y, les signaux d'entrée x et y étant représentés par les expressions

$$x = g_x \cos\theta + z_x$$

$$y = g_y \sin\theta + z_y$$

où $g_x$ et $g_y$ représentent les fluctuations des signaux d'entrée x et y respectivement par rapport à une amplitude moyenne, et $z_x$ et $z_y$ représentent la fluctuation du point zéro respectif desdits signaux d'entrée x et y, et où ledit moyen de détection (3) peut être utilisé pour détecter les valeurs maximales $d_0$, $d_2$, $d_4$ et $d_6$.

3.  Système de mesure selon la Revendication 1, dans lequel la correction n'est faite que pour la diaphonie entre lesdits signaux d'entrée x et y et les fluctuations du point zéro dans lesdits signaux, de telle sorte que les signaux d'entrée sont représentés par les expressions :

$$x = G(\cos\theta + k \sin\theta) + z_x$$

$$y = G(\sin\theta + k \cos\theta) + z_y$$

où G est un coefficient d'amplitude moyen commun, k est un coefficient de diaphonie et $z_x$ et $z_y$ représentent les fluctuations respectives du point zéro desdits signaux d'entrée x et y, et où ledit moyen de détection (3) peut être utilisé pour détecter les valeurs maximales $d_1$, $d_3$, $d_5$ et $d_7$.

4.  Système de mesure selon la Revendication 1, dans lequel lesdits signaux d'entrée x et y sont représentés par les expressions :

$$x = G(\cos\theta + g \cos\theta + k \sin\theta - b_x \cos 2\theta + h \cos 3\theta) + z_x$$

$$y = G(\sin\theta - g \sin\theta + k \cos\theta + b_y \cos 2\theta - h \sin 3\theta) + z_y$$

où G, g, k, $b_x$, $b_y$, h, $z_x$ et $z_y$ sont des coefficients respectifs correspondant à la grandeur des facteurs d'erreur respectifs comprenant l'amplitude moyenne, la différence d'amplitude entre les deux signaux x et y, la diaphonie, l'harmonique de second ordre inclus dans le signal x, l'harmonique de second ordre inclus dans le signal y, l'harmonique de troisième ordre inclus dans les deux signaux x et y à la même valeur, respectivement, le point zéro du signal x et le point zéro du signal y; et dans lequel ledit moyen générateur de coefficients (4) détermine au moins l'un des coefficients en utilisant les expressions suivantes donnant les relations entre les valeurs détectées par le moyen de détection (3) et les grandeurs respectives des facteurs d'erreur :

$$d_0 = G(1 + g - b_x + h) + z_x$$

$$d_1 = \sqrt{2}\, G(1 + k - h) + z_x + z_y$$

$$d_2 = G(1 - g - b_y + h) + z_y$$

$$d_3 = \sqrt{2}\, G(1 - k - h) - z_x + z_y$$

$$d_4 = G(1 + g + b_x + h) - z_x$$

$$d_5 = \sqrt{2}\, G(1 + k - h) - z_x - z_y$$

$$d_6 = G(1 - g + b_y + h) - z_y$$

$$d_7 = \sqrt{2}\, G(1 - k - h) + z_x - z_y.$$

**5.** Système de mesure selon l'une quelconque des revendications précédentes, dans lequel ledit moyen de détection (3) sert à obtenir une valeur maximale détectée d'un type donné ($d_1$ à $d_7$) par une procédure de lissage exponentielle agissant sur des valeurs maximales détectées successives du type donné.

**6.** Système de mesure selon la Revendication 5 dans lequel ledit moyen de détection (3) sert à exécuter ladite procédure de lissage exponentielle sur des valeurs maximales détectées successives d'un type donné qui sont détectées aux valeurs de $\theta$ qui sont séparées par $\pi/4$.

**7.** Système de mesure selon l'une quelconque des revendications précédentes dans lequel ledit moyen de génération de signaux de sortie (2) peut être utilisé pour produire ledit signal de sortie représentant la position angulaire $\theta$ à partir des signaux corrigés x et y par une opération arc-tangente.

**8.** Méthode de compensation des erreurs dans la détection d'une position angulaire $\theta$ d'une pièce rotative, qui comprend l'utilisation d'un instrument de mesure pour détecter la position angulaire $\theta$ d'une pièce pivotante et pour fournir des signaux d'entrée x et y qui varient idéalement comme $\cos\theta$ et $\sin\theta$ respectivement mais sont susceptibles d'erreur, et l'emploi d'une procédure de compensation de signaux répondant auxdits signaux x et y pour générer à partir d'eux un signal de sortie représentant la position angulaire $\theta$, ladite procédure de compensation de signaux comprenant les étapes de réduction des erreurs dans lesdits signaux d'entrée x et y résultant d'au moins un des facteurs d'erreur suivants, à savoir : la différence d'amplitude, la variation du point zéro, la diaphonie, l'harmonique de second ordre et l'harmonique de troisième ordre, respectivement, caractérisée en ce que les étapes de réduction des erreurs comprennent :

une étape de correction de signaux (1) répondant auxdits signaux d'entrée x et y pour traiter lesdits signaux d'entrée x et y avec l'aide de coefficients en mémoire et pour générer des signaux corrigés x et y respectivement;
une étape de détection (3) répondant auxdits signaux corrigés x et y pour détecter au moins une d'un ensemble de valeurs maximales $d_0$, $d_1$, $d_2$, $d_3$, $d_4$, $d_5$, $d_6$ et $d_7$ appartenant aux valeurs x, x+y, y, y-x, -x, -(x+y), -y et x-y respectivement, desdits signaux corrigés x et y;
une étape de génération de coefficients (4) répondant à ladite ou auxdites valeurs maximales pour générer à partir d'elles lesdits coefficients pour qu'ils soient mémorisés et utilisés dans ladite étape de correction de signaux (1) dans le traitement desdits signaux d'entrée x et y;
une étape de génération de signaux de sortie (2) répondant auxdits signaux corrigés x et y pour générer un signal de sortie représentant ladite position angulaire $\theta$; et
ladite étape de détection (3) comprenant la détection de ladite ou desdites valeurs maximales di aux valeurs de $\theta = i\pi/4 + \delta$ où $\delta$ est un angle dont la valeur du cosinus peut être approximativement égale à 1 en pratique et i est un nombre entier entre 0 et 7.

**9.** Méthode de compensation des erreurs selon la Revendication 8, dans laquelle lesdits signaux d'entrée x et y sont représentés par les expressions :

$$x = G(\cos\theta + g\cos\theta + k\sin\theta - b_x\cos 2\theta + h\cos 3\theta) + z_x$$

$$y = G(\sin\theta - g\sin\theta + k\cos\theta + b_y\cos 2\theta - h\sin 3\theta) + z_y$$

où G, g, k, $b_x$, $b_y$, h, $z_x$ et $z_y$ sont des coefficients respectifs correspondant à la grandeur des facteurs d'erreur respectifs comprenant l'amplitude moyenne, la différence d'amplitude entre les deux signaux x et y, la diaphonie, l'harmonique de second ordre inclus dans le signal x, l'harmonique de second ordre inclus dans le signal y, l'harmonique de troisième ordre inclus dans les deux signaux x et y à la même valeur respectivement, le point zéro du signal x et le point zéro du signal y; et dans laquelle ladite étape de génération de coefficients (4) détermine au moins un des coefficients en utilisant les expressions suivantes donnant les relations entre les valeurs détectées par le premier moyen et les amplitudes respectives des facteurs d'erreur :

$$d_0 = G(1 + g\text{-}b_x + h) + z_x$$

$$d_1 = \sqrt{2}\, G(1 + k\text{-}h) + z_x + z_y$$

$$d_2 = G(1 - g - b_y + h) + z_y$$

$$d_3 = \sqrt{2}\, G(1 - k - h) - z_x + z_y$$

$$d_4 = G(1 + g + b_x + h) - z_x$$

$$d_5 = \sqrt{2}\, G(1 + k - h) - z_x - z_y$$

$$d_6 = G(1 - g + b_y + h) - z_y$$

$$d_7 = \sqrt{2}\, G(1 - k - h) + z_x - z_y.$$

FIG.1

F I G. 2

# FIG. 3(a)

MAIN  PROGRAM

INITIALIZATION *

GET  x, y

$A = (x - z_x)/G$
$B = (y - z_y)/G$
$C = A^2 - B^2$

$x = x - GgA - GkB + Gb_xC - z_x$
$y = y + GgB - GkA - Gb_yC - z_y$

$\theta = atan2(x, y)$

$\theta = \theta + hsin4\theta$

$\theta < 0$ ? —— Y —→ $\theta = \theta + 2\pi$

N

PUT  $\theta$

$i = floor(4(\theta + \delta)/\pi)$

N ←—— $abs(\theta - i\pi/4) < \delta$

Y

$i$ ?

(a)

(b)

FIG. 3

| |
|---|
| FIG. 3(a) |
| FIG. 3(b) |
| FIG. 3(c) |

23

# FIG. 3(b)

(a)  (b)

0 — $f04=0$ — N → $d_0 = d_0 + p(x-d_0)$ ; $f04 = 0$, $f = f|1$ ; Y

1 — $f15=1$ — N → $d_1 = d_1 + p(x+y-d_1)$ ; $f15 = 1$, $f = f|2$ ; Y

2 — $f26=2$ — N → $d_2 = d_2 + p(y-d_2)$ ; $f26 = 2$, $f = f|4$ ; Y

3 — $f37=3$ — N → $d_3 = d_3 + p(-x+y-d_3)$ ; $f37 = 3$, $f = f|8$ ; Y

4 — $f04=4$ — N → $d_4 = d_4 + p(-x-d_4)$ ; $f04 = 4$, $f = f|16$ ; Y

5 — $f15=5$ — N → $d_5 = d_5 + p(-x-y-d_5)$ ; $f15 = 5$, $f = f|32$ ; Y

6 — $f26=6$ — N → $d_6 = d_6 + p(-y-d_6)$ ; $f26 = 6$, $f = f|64$ ; Y

7 — $f37=7$ — N → $d_7 = d_7 + p(x-y-d_7)$ ; $f37 = 7$, $f = f|128$ ; Y

$f=255$ — Y → SETTING OF COEFFICIENTS ** ; N

# F I G. 3(c)

INITIALIZATION [x]

$p = 1/256$

$Gg = Gk = Gb_x = Gb_y = 0$

$Gz_x = z_y = h = 0$

$G = $ SPECIFIED VALUE

$d_0 = d_2 = d_4 = d_6 = G$

$d_1 = d_3 = d_5 = d_7 = \sqrt{2}G$

---

$f = 0$

$f04 = f15 = f26 = f37 = -1$

---

RETURN

SETTING OF COEFFICIENTS [**]

$s_0 = (d_0 - d_4)/2$, $s_4 = (d_0 + d_4)/2$

$s_1 = (d_1 - d_5)/2$, $s_5 = (d_1 + d_5)/2\sqrt{2}$

$s_2 = (d_2 - d_6)/2$, $s_6 = (d_2 + d_6)/2$

$s_3 = (d_3 - d_7)/2$, $s_7 = (d_3 + d_7)/2\sqrt{2}$

---

$z_x = (s_1 - s_3)/2$, $z_y = (s_1 + s_3)/2$

$Gb_x = z_x - s_0$, $Gb_y = z_y - s_2$

$Gg = (s_4 - s_6)/2$, $Gk = (s_5 - s_7)/2$

$G = (s_4 + s_5 + s_6 + s_7)/4$

$h = (s_4 - s_5 + s_6 - s_7)/4G$

---

$f = 0$

---

RETURN

# F I G. 4(a)

ARC-TANGENT
OPERATION ERROR

+1/10000

ERROR

0

-1/10000

O — SHAFT ROTATIONAL ANGLE — 1/2

# F I G. 4(b)

+1/10000

ERROR

0

-1/10000

1/2 — SHAFT ROTATIONAL ANGLE — 1

# F I G. 5

+ π/10

ERROR

COMPENSATED

0

NOT
COMPENSATED

- π/10

O — θ — 2π